# EUROPÄISCHE PATENTSCHRIFT

(11) **EP 2 309 251 B1**
(45) Veröffentlichungstag und Bekanntmachung des Hinweises auf die Patenterteilung: **12.06.2019**
(21) Anmeldenummer: 10009248.5
(22) Anmeldetag: 06.09.2010
(51) Int. Cl.: G01N 21/25, G01N 35/02, G01N 21/03, G01N 21/82, G01N 35/00

(54) **Vorrichtung und Verfahren für die photometrische Untersuchung von Proben und Analysegerät, welches eine solche Vorrichtung aufweist**
Apparatus and method for photometric testing of samples and analysis device comprising such an apparatus
Appareil et procédé pour l'examen photométrique d'échantillons et dispositif d'analyse comprenant un tel appareil

(30) Priorität: 30.09.2009 DE 102009043524
(43) Veröffentlichungstag der Anmeldung: 13.04.2011
(73) Patentinhaber: Siemens Healthcare Diagnostics Products GmbH, 35041 Marburg (DE)
(72) Erfinder: Meller, Paul, Dr., 61273 Wehrheim (DE); Pufahl, Holger, Dr., 65835 Liederbach (DE)

(56) Entgegenhaltungen:
- DE-A1- 4 013 588
- DE-C1- 3 904 201
- JP-A- 62 121 365
- JP-A- 2007 225 339
- US-A- 4 234 538
- US-A- 4 848 914
- US-A- 5 178 833

## Beschreibung

### ERFINDUNGSGEBIET

Die vorliegende Erfindung bezieht sich auf eine Vorrichtung und ein Verfahren für die photometrische Untersuchung von Proben.

### HINTERGRUND DER ERFINDUNG

In automatisierten Analysegeräten, wie sie heute routinemäßig in der Analytik, der Forensik, der Mikrobiologie und der klinischen Diagnostik Verwendung finden, besteht die Notwendigkeit, verschiedene Eigenschaften von Flüssigkeiten - z.B. bei Blutgerinnungsuntersuchungen - mit optischen Verfahren schnell, exakt und reproduzierbar zu bestimmen. Im Fall von hämostatischen Analysegeräten finden heute im Wesentlichen zwei verschiedene Messprinzipien Verwendung. Zum einen werden Geräte mit einer stationären Detektionseinheit, beispielsweise einem stationären Photometer, sowie einem scheibenförmigen, bewegbaren Probenhalter (sog. Probenkarussell) verwendet. Die Proben im Probenhalter werden sukzessive an der Detektionseinheit vorbeigeführt und durchgemessen. Demzufolge muss das Probenkarussell jedes Mal anhalten, wenn eine neue Probe in das Karussell eingebracht bzw. eine bereits vermessene Probe aus dem Karussell entnommen wird. Mit diesen Schritten geht somit eine deutliche Effizienzeinbuße einher. Alternativ wäre es denkbar, dass ein Greifer Proben aus dem rotierenden Probenkarussell greift, jedoch ist eine solche Anordnung sehr fehleranfällig.

Das andere Messprinzip bedient sich mehrerer stationärer optischer Detektionseinheiten. Dabei ist pro Probe jeweils eine Detektionseinheit vorgesehen. Auf diese Weise können immer mehrere Proben gleichzeitig gemessen werden. Allerdings haben bei diesem Messprinzip alle Detektionseinheiten ihr eigenes optisches Setup, was die Material- und Fertigungskosten in die Höhe treibt, die Vorrichtung fehleranfällig und wartungsaufwendig macht und überdies die Gefahr von Genauigkeitsvarianzen zwischen den einzelnen Detektionseinheiten birgt, die nur schwer unter Kontrolle zu bringen sind.

US 4,234,538 offenbart eine Vorrichtung für die photometrische Untersuchung von Proben, aufweisend mindestens eine Probenhalterungseinrichtung, welche bewegbar ausgebildet ist, auch wenn sie in manchen Ausführungsbeispielen nicht ständig bewegt wird.

### KURZE DARSTELLUNG DER ERFINDUNG

Es ist eine Aufgabe der vorliegenden Erfindung, eine Vorrichtung zur photometrischen Untersuchung von Proben bereitzustellen, die die Nachteile der im Stand der Technik beschriebenen Geräte vermeidet.

Ferner ist es Aufgabe der vorliegenden Erfindung, eine solche Vorrichtung so auszugestalten, dass während des Messens kontinuierlich Reagenzien in die Probengefäße pipettiert werden können.

Diese Aufgaben werden mit den Merkmalen des vorliegenden Anspruchssatzes gelöst. Die Unteransprüche geben bevorzugte Ausführungsformen an.

### KURZE BESCHREIBUNG DER ZEICHNUNGEN

Die vorliegende Erfindung wird durch die im Folgenden gezeigten und diskutierten Figuren genauer erläutert. Dabei ist zu beachten, dass die Figuren nur beschreibenden Charakter haben und nicht dazu gedacht sind, die Erfindung in irgendeiner Form einzuschränken.
Fig. 1 zeigt eine Aufsicht auf eine Vorrichtung für die photometrische Untersuchung von Proben. Diese Vorrichtung, welche nicht in den Schutzumfang der Ansprüche fällt, weist nur eine Messeinrichtung auf. Zudem wird der zeitliche Verlauf der Messung angedeutet.
Fig. 2 zeigt eine schematische Darstellung des zeitlichen Verlaufs des Messvorgangs gemäß Fig. 1.
Fig. 3 zeigt einen Querschnitt der Vorrichtung gemäß Fig. 1.
Fig. 4 zeigt eine Ausführungsform der erfindungsgemäßen Vorrichtung für die photometrische Untersuchung von Proben. Die Ausführungsform entspricht der Vorrichtung aus Fig. 1, mit dem Unterschied, dass hier drei Messeinrichtungen anstatt nur einer vorliegen.
Fig. 5 zeigt eine weitere Vorrichtung, welche nicht in den Schutzumfang der Ansprüche fällt, mit konzentrischer Anordnung der Probengefäße in zwei Reihen.
Fig. 6 zeigt eine dreidimensionale Darstellung einer erfindungsgemäßen Vorrichtung.

### AUSFÜRHLICHE BESCHREIBUNG DER ERFINDUNG

Erfindungsgemäß ist eine Vorrichtung zur photometrischen Untersuchung von Proben vorgesehen. Diese weist eine Probenhalterungseinrichtung für mindestens zwei Probengefäße sowie eine Messeinrichtung und eine bewegbare Einrichtung auf. Die Probenhalterungseinrichtung ist dabei stationär, das heißt nicht bewegbar, ausgebildet und die Messeinrichtung ist an der bewegbaren Einrichtung angeordnet, so dass sie mittels der bewegbaren Einrichtung verfahrbar ist.

Der Begriff "photometrische Untersuchungen", wie vorliegend verwendet, bezieht sich auf Absorptions-, Reflektions-, Beugungs-, Fluoreszenz-, Phosphoreszenz-, Chemilumineszenz- und/oder Streuungsmessungen mit elektromagnetischen Wellen. Hier ist zunächst an elektromagnetische Wellen des sichtbaren Spektrums gedacht (zwischen etwa 350 nm und etwa 750 nm Wellenlänge), jedoch auch an Wellen im Infrarot- (IR-) Bereich (zwischen etwa 750 nm und etwa 1 mm Wellenlänge) und im Ultraviolett- (UV-) Bereich (zwischen etwa 350 nm und etwa 50 nm Wellenlänge).

In der erfindungsgemäßen Vorrichtung müssen im Unterschied zum Stand der Technik nicht mehr die Probengefäße verfahren werden, sondern nur die Messeinrichtungen. Daraus ergibt sich zunächst einmal der Vorteil, dass insgesamt weniger Massen bewegt werden. Zudem wird bei flüssigen Proben ein Überschwappen der Flüssigkeiten bzw. etwaige durch das Verfahren verursachte Bewegungen, die zu Verfälschungen des Messergebnisses führen können, vermieden.

Aus diesen Gründen bestand bei bisher bekannten Geräten außerdem immer die Notwendigkeit die Fahrgeschwindigkeit, mit der die Proben bewegt werden, anzupassen und entsprechend zu verlangsamen also Abbrems- und Beschleunigungsvorgänge zu integrieren. Demzufolge ist es ein weiterer Vorteil der erfindungsgemäßen Vorrichtung, dass diese Notwendigkeit nun entfällt und somit die Fahrgeschwindigkeit - und daraus resultierend die Messfrequenz - die Anzahl der Messungen pro Sekunde - der Vorrichtung gesteigert werden kann.

Zudem ist bei der erfindungsgemäßen Vorrichtung - im Gegensatz zu einem bewegbaren Probenteller - die Temperierung der Proben technisch einfacher zu erreichen, weil die elektrische Versorgung des Heizelementes und die Sensorik sich auf einem stationären Teil befinden.

Überdies ist in der erfindungsgemäßen Vorrichtung der Zugriff auf jede Probe jederzeit möglich, da die Probengefäße selber nicht bewegt werden. Insbesondere ist man nicht auf ein sequenzielles Durchmessen der einzelnen Probengefäße angewiesen, sondern kann einzelne Probengefäße gezielt anfahren und durchmessen. Dabei ist es insbesondere möglich, die Verfahrrichtung der Messeinrichtung mit geringem Aufwand zu ändern, was mit der diskutierten Karusselleinrichtung aus dem Stand der Technik in der Praxis aufgrund der höheren Massen nur unter erhöhtem Aufwand realisierbar ist.

Ferner ist die erfindungsgemäße Vorrichtung vorteilhaft, da bei dieser Anordnung quasi-kontinuierlich und mit hoher Frequenz gemessen werden kann. Hierauf wird weiter unten noch eingegangen.

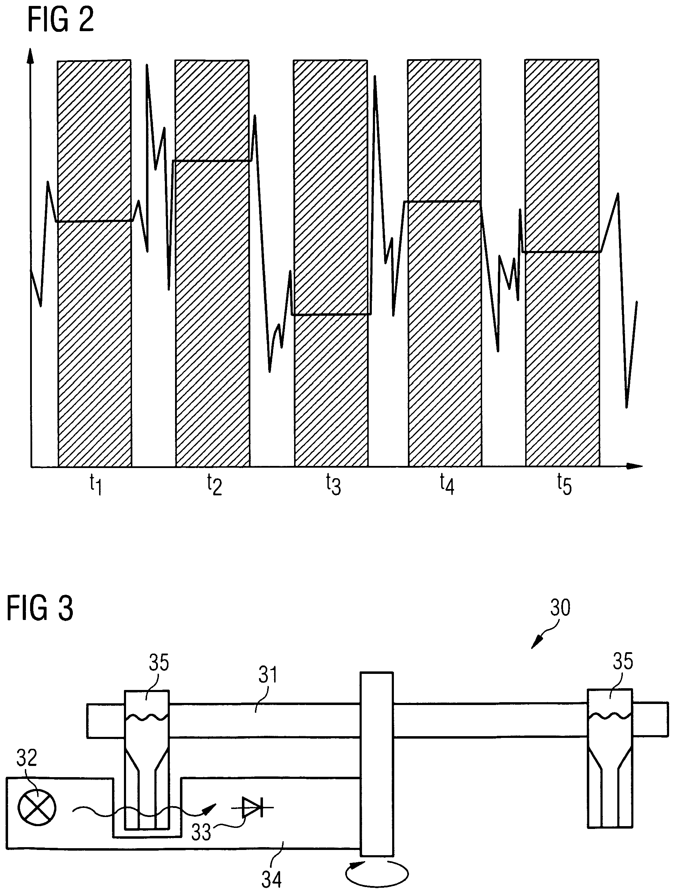

Der Begriff "Probenhalterungseinrichtung" soll im Folgenden eine Einrichtung bezeichnen, die mindestens zwei Probengefäße aufnehmen und halten kann. Dazu weist die Probenhalterungseinrichtung Mittel zum Halten von mindestens zwei Probengefäßen auf. Zum Halten von Probengefäßen eignen sich beispielsweise Auslassungen (Bohrungen, Stanzlöcher, Vertiefungen) im Körper der Probenhalterungseinrichtung, die so ausgeformt sind, dass die vorgesehenen Probengefäße passgenau eingesetzt und wieder entfernt werden können. Ferner eignen sich mechanische Mittel (beispielsweise Bauteile mit Innengewinde), die eine vorübergehende Fixierung von Probengefäßen, die entsprechend ausgestattet sind (beispielsweise mit einem Bereich oder Bauteil mit Außengewinde), an der Probenhalterungseinrichtung ermöglichen. Insbesondere kann die Probenhalterungseinrichtung das Messen der Proben beispielsweise von unten, von der Seite, von oben oder eine Kombination aller drei Möglichkeiten zulassen (vgl. Fig. 3).

Vorzugsweise ist die Probenhalterungseinrichtung so ausgestaltet, dass sie die Temperatur der Probe im Probengefäß regulieren kann. Dazu besteht die Probenhalterungseinrichtung bevorzugterweise aus einem wärmeleitenden Material und umfasst ein elektrisches Bauelement, das elektrische Energie in Wärmeenergie umwandelt, d. h. einen Heizwiderstand, z. B. in Form einer Heizwendel, eines Heizbandes oder einer Heizmanschette. Besonders bevorzugt erwärmt die Probenhalterungseinrichtung die Probe auf ∼ 37°C.

Im Übrigen weiß der Fachmann, wie eine Probenhalterungseinrichtung ausgestaltet sein muss, damit das Beschicken mit Probengefäßen und das Entnehmen von Probengefäßen sicher und effizient verläuft. Die Beschickung der Probenhalterungseinrichtung mit Probengefäßen sowie die Entnahme derselben kann manuell durch einen Benutzer erfolgen. In einem automatischen Analysegerät sind bevorzugterweise gesteuerte Vorrichtungen, wie z. B. Greifarme vorgesehen, die die Probengefäße transportieren können.

Der Begriff "Probengefäß" soll im Folgenden ein Gefäß bezeichnen, in dem sich die zu messende Probe bzw. ein Proben-Reagenz-Gemisch befindet. Das Probengefäß sollte so beschaffen sein, dass die Messung schnell, exakt und reproduzierbar durchgeführt werden kann. Zudem sollte sich das Probengefäß gut innerhalb eines Automaten transportieren lassen. Generell sind Küvetten bevorzugt, die aus einem für den jeweils verwendeten Wellenlängenbereich transparenten Material geringer Eigenabsorption bestehen und ggf. auch kostengünstig in der Herstellung sind. Diese können z.B. aus transparentem Kunststoff, wie z.B. Polycarbonat oder Polymethylmethacrylat bestehen. Insbesondere für Anwendungen, bei denen ultraviolettes Licht verwendet wird, können auch Quarzküvetten verwendet werden.

Der Begriff "Messeinrichtung" bezeichnet eine Einrichtung, die eine wesentliche Komponente zur Durchführung einer photometrischen Messung umfasst, d. h. mindestens eine Lichtquelle oder mindestens einen Photodetektor. Erfindungsgemäß umfasst eine Messeinrichtung mindestens eine Lichtquelle und mindestens einen Photodetektor.

Der Begriff "bewegbare Einrichtung" soll im Folgenden eine Einrichtung bezeichnen, die bewegbar ist, also eine Messeinrichtung an verschiedene Positionen fahren kann, und so das Vermessen von Proben an verschiedenen Positionen ermöglicht. Bei einer Ausführungsform handelt es sich bei der bewegbaren Einrichtung um ein stangenförmiges Bauelement, das auf eine Achse montiert ist und um diese Achse (Rotationsachse) rotierbar ist.

In einer Vorrichtung, welche nicht unter den Schutzumfang der Ansprüche fällt, ist vorgesehen, dass die Probengefäße in linearer Anordnung an der Probenhalterungseinrichtung angeordnet sind und die Messeinrichtung mit Hilfe der bewegbaren Einrichtung parallel zu der besagten linearen Anordnung verfahrbar ist.

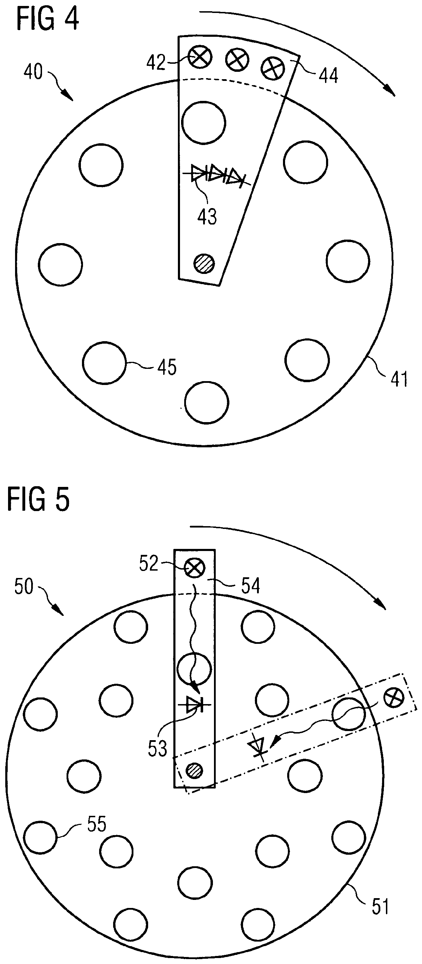

In einer Vorrichtung, welche nicht unter den Schutzumfang der Ansprüche fällt, ist vorgesehen, dass die Probengefäße in konzentrischer Anordnung an der Probenhalterungseinrichtung angeordnet sind, also in Form von mindestens zwei konzentrisch zueinander angeordneten Kreisen. Auf diese Weise lassen sich mehr Probengefäße auf der Vorrichtung unterbringen (Fig. 5).

Erfindungsgemäß ist vorgesehen, dass die Probengefäße in kreisbogenartiger Anordnung an der Probenhalterungseinrichtung angeordnet sind, und die Messeinrichtung mit Hilfe der bewegbaren Einrichtung umlaufend zur Anordnung der Probengefäße verfahrbar ist.

Dabei sind die Probengefäße in der Art eines stationären, das heißt nicht bewegbar ausgebildeten, nicht rotierenden Scheibe- im folgenden auch als "zylinderförmig ausgebildete Küvettenaufnahme" oder "zylindrische Küvettenaufnahme" bezeichnet - angeordnet, während die Messeinrichtung rotiert und dabei die Positionen der einzelnen Probengefäße abfährt. Bevorzugterweise entspricht die Rotationsachse der Messeinrichtung dem Mittelpunkt der kreisbogenartigen Anordnung der Probengefäße bzw. dem gemeinsamen Mittelpunkt konzentrisch angeordneter Probengefäße .

In einer besonders bevorzugten Ausführungsform weist die Vorrichtung z.B. 25 Küvetten (mit einem Kreisbogenabstand zwischen den Küvetten von 14,4°)auf, und die Messeinrichtung rotiert mit 2 Hz, d.h. der Inhalt jeder Küvette wird zweimal pro Sekunde gemessen. Hierbei kann eine der 25 Positionen als Referenzposition dienen, in welcher ein Referenz- oder ein Blindwert gemessen wird.

Ferner weist die Messeinrichtung mindestens eine Lichtquelle und mindestens einen Photodetektor auf. In einer kreisbogenartigen Anordnung der Küvetten an einer zylindrischen Küvettenaufnahme könnte mithin die Lichtquelle oder der Photodetektor um den Mittelpunkt der zylindrischen Küvettenaufnahme herum fest angeordnet sein, und es würde jeweils nur ein Photodetektor bzw. eine Lichtquelle rotieren. Auf diese Weise könnte der apparative Aufwand gesenkt werden. Zudem wird durch diesen Aufbau auch die oben erwähnte Gefahr von Genauigkeitsvarianzen zwischen den einzelnen Detektionseinheiten gebannt.

Bevorzugt wird weiterhin, dass die Lichtquelle eine LED (Light Emitting Diode) aufweist. Eine solche Lichtquelle weist eine geringere Baugröße und ein geringeres Gewicht als andere aus dem Stand der Technik bekannte Lichtquellen auf. Dies führt zu erheblichen Vereinfachungen der Konstruktion und reduziert durch das geringere Gewicht etwaige Unwuchten, die durch eine Rotation der Messeinrichtung mit einer hohen Masse verursacht werden können. Überdies weisen LEDs eine geringe Wärmeentwicklung auf, und der Wellenlängenbereich von LEDs ist genau definierbar, so dass ggf. auf entsprechende Kühlung und/oder Filter verzichtet werden kann, was wiederum Gewicht, Aufwand und Baugröße reduziert und so Kosten und ggf. Unwuchten vermindert. Hinzu kommen eine hohe Stoß- und Schockbelastbarkeit sowie eine schnelle Schalt- und Modulierbarkeit, die für die Verwendung einer LED sprechen.

Ebenso kann jedoch vorgesehen sein, dass es sich bei der Lichtquelle um eine Laserdiode, in angepasster Bauart, eine Glühlampe, eine Gasentladungslampe oder eine Lichtbogenlampe handelt.

Bei dem Photodetektor handelt es sich bevorzugt um eine Photodiode, die sichtbares Licht, in manchen Ausführungen auch IR-, oder UV-Licht durch den inneren Photoeffekt in einen elektrischen Strom bzw. eine Spannung umwandelt.

Alternativ handelt es sich bei dem Photodetektor um einen CCD-Sensor. CCD-Sensoren bestehen aus einer Matrix oder einer Zeile mit lichtempfindlichen Photodioden. Die Verwendung eines CCD-Sensors ist insbesondere dann sinnvoll, wenn die Vorrichtung mehr als eine Messeinrichtung aufweist, beispielsweise dann, wenn Messungen bei verschiedenen Wellenlängen durchgeführt werden sollen. Hier kann jedes Element des CCD-Sensors als Photodetektor für eine der Messeinrichtungen dienen, was den apparativen Aufbau erheblich vereinfacht.

Ebenso kann jedoch vorgesehen sein, dass es sich bei dem Photodetektor um eine Photozelle, einen Siliziumphotodetektor, Avalanchephotodetektor oder Photomultiplier handelt.

Grundsätzlich kann die Messeinrichtung weiterhin noch Filter, optische Elemente (z.B. Linsen zum Aufbau eines Kondensors), Regelelektronik, Auswerte- und Ausleseelektronik und/oder eine Spannungsversorgung aufweisen.

Erfindungsgemäß weist die Vorrichtung mehrere Messeinrichtungen auf. Erfindungsgemäß sind die mehreren Messeinrichtungen dazu gemeinsam an einer einzigen bewegbaren Einrichtung angeordnet (vgl. Fig. 4). Alternativ können mehrere bewegbare Einrichtungen vorgesehen sein, an welchen jeweils mehrere Messeinrichtungen angordnet sind.

Dadurch kann eine Probe sequenziell bei mehreren Wellenlängen gemessen werden. Vorzugsweise liegen die Wellenlängen in einem Bereich von etwa 300 nm bis etwa 1100 nm. Bevorzugt werden dabei insbesondere die Wellenlängen 340 nm, 405 nm, 470 nm, 600 nm und 850 nm, da sie sich speziell für hämostatische Untersuchungen eignen.

Bei anderen Messprotokollen, die mit der erfindungsgemäßen Vorrichtung durchgeführt werden, können jedoch auch andere Wellenlängen eingesetzt werden. Ein Fachmann kennt die Wellenlängen, die für eine bestimmte Messung verwendet werden sollten.

Unter Hämostase versteht man den lebenswichtigen Prozess, der die bei Verletzungen der Blutgefäße entstehenden Blutungen stoppt. Zwei gegensätzliche Aufgaben kennzeichnen das Hämostasesystem. Einerseits muss durch ständige Antikoagulation eine kontinuierliche Strömung des Blutes gewährleistet sein, andererseits muss im Bedarfsfall so rasch wie möglich und exakt auf den Verletzungsort begrenzt die Blutstillung - also die Blutgerinnung - induziert werden.

Zur Bestimmung der Gerinnungsfähigkeit dienen spezielle Tests, bei denen die Aktivität eines einzelnen oder mehrerer Blutgerinnungsfaktoren durch die Messung der Fibrinbildungsgeschwindigkeit in einer Blut- oder Plasmaprobe bestimmt wird. Typische Beispiele für derartige Gerinnungstests sind die Prothrombinzeit (PT) (auch Quick-Test oder Thromboplastinzeit genannt), die aktivierte partielle Thromboplastinzeit (APTT), die Thrombinzeit (TT), die Batroxobinzeit (BT) oder die Ecarinzeit (ECT).

Da die eigentliche Nachweisreaktion an die Polymerisation des zunächst noch löslichen Fibrins zu unlöslichem hochpolymeren Fibrin gebunden ist, ist die Auswahl der Wellenlänge, bei der die photometrische Messung stattfindet, wichtig. In der Regel werden zur Messung Wellenlängen von mehr als 500 nm gewählt. Dadurch werden die häufigsten Störgrößen der Probe - Bilirubin und Hämoglobin - minimiert.

Unter Hämolyse versteht man die Auflösung von Erythrozyten durch Zerstörung der Zellmembran, und die damit einhergehende Freisetzung von Hämoglobin sowie anderer zytoplasmatischer Bestandteile (z.B. Lactatdehydrogenase).

Bei hämolytischem Blut kann durch Separation von Plasma und Erythrozyten photometrisch z.B. der Gehalt von Hämoglobin im Plasma quantifiziert werden. Die photometrische Bestimmung des Blutes ist eine Standardmethode in der Medizin. So kann die Hämolyse als Indikator für verschiedene Grunderkrankungen unter anderem für Immunreaktion gegen Membranbestandteile, toxische Zerstörung, Parasiten, bakterielle Enzyme und strukturelle Auffälligkeiten verwendet werden.

Die bei Hämolyse- bzw. Hämostasemessungen zu bestimmenden Größen umfassen z.B. Haptoglobin, Retikulozyten, indirektes Bilirubin, LDH und Kalium (bei massiver Hämolyse).

Bei der Cyanmethämoglobin-Methode werden nach der Eliminierung streuender Zellbestandteile alle Formen des Hämoglobins (Hb) in stabiles Cyanmethämoglobin (HbCN) umgewandelt, womit eine Änderung des spektralen Absorptionskoeffizienten unabhängig vom vorherigen reduzierten oder oxygenierten Zustand verbunden ist. Die charakteristischen Absorptionsspektren von oxygeniertem und reduziertem Hämoglobin bei der isosbestischen Wellenlänge ermöglichen die quantitative Bestimmung der Sauerstoffsättigung im Blut. Weiterhin können auch die Konzentrationen der Hämoglobinderivate HbCO (Carboxy-Hämoglobin), MetHb (Methämoglobin) und HbF (fetales Hämoglobin) anhand ihrer spezifischen Absorptionsspektren bestimmen werden. Beispielsweise ist bei einer Intoxikation mit Kohlenmonoxid ein erhöhter Wert für HbCO, bei Nitrit- und Stickoxidinhalation ein erhöhter Wert für MetHb feststellbar.

Bei Hämolyse- bzw. Hämostasemessungen werden, je nach untersuchter Größe, verschiedene Wellenlängen eingesetzt. Die Indikatorreaktion von Lactatdehydrogenase (Abnahme von NADH) findet beispielsweise bevorzugt bei 340 nm statt.

Für den Fall einer kreisbogenartigen Anordnung der Probengefäße können die mehreren Messeinrichtungen in einem einheitlichen, umlaufend angeordneten Array auf einer bewegbaren Einrichtung angeordnet sein (siehe Fig. 4).

Durch eine derartige Anordnung ergeben sich besonders ruhige Laufeigenschaften der verfahrbaren Messeinrichtung(en), und es lassen sich Vereinfachungen bei der Messwertanalyse realisieren.

Bevorzugt wird ferner, dass mindestens eine Messeinrichtung so ausgestaltet ist, dass sie während des Verfahrens mithilfe der bewegbaren Einrichtung kontinuierlich bzw. quasi-kontinuierlich messen kann.

Bei einer derartigen Ausführungsform bestimmt und kennt eine Auswerteelektronik bzw. die nachgeschaltete Steuersoftware stets die räumliche Anordnung von Messeinrichtung und den mindestens zwei Probengefäßen zueinander, z.B. über bekannte Winkel oder über Triggersignale, mit denen z.B. ein die Messeinrichtung verfahrender Schrittmotor gesteuert wird. Die Elektronik kann daher jederzeit das generierte Signal, z.B. ein Absorptionssignal, einem bestimmtem Ort (d.h. z.B. einer bestimmten Küvette) zuweisen. So können beispielsweise durch Glaskanten oder Luftzwischenräume generierte Signale von tatsächlichen, durch eine Probe generierten Messsignalen unterschieden werden (siehe Fig. 2).

Der Begriff "kontinuerlich messen", wie hier verwendet, bezeichnet ein analoges Auslesen der Messeinrichtung. Ebenso kann damit aber auch quasi-kontinuierliches digitales Auslesen mit einer hohen Ausleserate, beispielsweise > 1000 Hz, gemeint sein.

Es kann dabei überdies vorgesehen sein, dass mindestens ein Teil der gewonnenen Messwerte über ein bestimmtes Zeitfenster gemittelt wird, um die Messgenauigkeit zu erhöhen.

In einer bevorzugten Ausführungsform ist die bewegbare Einrichtung unterhalb der Probenhalterungseinrichtung angeordnet (siehe Fig. 3). So lässt sich der vorteilhafte jederzeit mögliche Zugriff auf alle Küvetten am einfachsten mit dem kontinuierlichen Messen vereinbaren. Hinzu kommt, dass so während des Messvorganges mehr oder weniger kontinuierlich Reagenzien in die Probengefäße pipettiert werden können.

Bei anderen Ausführungsformen ist die bewegbare Einrichtung oberhalb der Probenhalterungseinrichtung angeordnet. Bei einer solchen Ausgestaltung könnten die Probengefäße beispielsweise von unten in die Probenhalterungseinrichtung eingebracht werden. So wäre ein Zugriff auf die Probengefäße zu jeder Zeit möglich, allerdings können in dieser Ausführungsform Flüssigkeiten nicht kontinuierlich den Probengefäßen beigefügt werden.

Außerdem ist bevorzugt vorgesehen, dass die Vorrichtung mindestens eine an der Probenhalterungseinrichtung angeordnete Mischeinrichtung aufweist.

Zwar ist gerade bei Hämolyse- bzw. Hämostasemessungen nicht in jedem Fall ein kontinuierliches Mischen der Probe während der Messung erforderlich (manchmal sogar unerwünscht), aber es gibt Testanforderungen, in denen ein Durchmischen sinnvoll ist, z.B. bei besonders trüben Proben oder bei der Thrombozytenaggregometrie.

Bevorzugterweise handelt es sich bei der Mischeinrichtung um eine magnetische Mischeinrichtung. In dieser bevorzugten Ausführungsform kann die Mischeinrichtung z.B. aus einem rotierenden Antriebsmagneten oder anderen Mitteln bestehen, die ein rotierendes und/oder oszillierendes elektromagnetisches Feld erzeugen. Eine magnetische Mischeinrichtung wirkt auf einen zweiten magnetischen oder ferromagnetischen Körper, z. B. in Form eines stäbchenförmigen Rührstiftes oder in Form von Partikeln (sog. Beads), der in einem Probengefäß enthalten ist, und versetzt diesen in Bewegung, wodurch die Probenflüssigkeit bzw. das Proben-Reagenz-Gemisch im Probengefäß durchmischt wird.

Es sind jedoch auch andere Mischeinrichtungen praktikabel, beispielsweise eine Einrichtung, die mittels Ultraschall mixt, und somit keine magnetischen oder ferromagnetischen Körper im Probengefäß benötigt. Ebenso kann eine Mischeinrichtung einen rotierenden Exzenter oder einen Lautsprecher aufweisen, mit dessen Hilfe Schwingungen auf die Probengefäße übertragen werden können.

Bevorzugt weist die Vorrichtung mehrere Mischeinrichtungen auf. Im Fall der bereits erwähnten kreisbogenartigen Anordnung der Probengefäße mit einer oder mehreren Messeinrichtungen, können z.B. an 4 von 25 Positionen für Probengefäße Mischeinrichtungen angeordnet sein. Eine solche Ausgestaltung hat sich insbesondere für Hämolyse- bzw. Hämostasemessungen bewährt, da hier nicht für alle Testanforderungen ein Mischen erforderlich ist.

Ein weiterer Gegenstand der vorliegenden Erfindung ist ein Analysengerät zur automatisierten Untersuchung von Flüssigproben, das eine erfindungsgemäße Vorrichtung für die photometrische Untersuchung von Proben umfasst. Derartige Analysengeräte zur automatisierten Untersuchung von Flüssigproben umfassen üblicherweise mindestens eine Vorrichtung zur Aliquotierung von Probenflüssigkeiten in ein Probengefäß,z. B. in Form eines ersten automatischen Pipettors, mindestens eine Vorrichtung zur Aliquotierung von Reagenzflüssigkeiten in ein Probengefäß, z. B. in Form eines zweiten automatischen Pipettors, sowie Mittel zur Steuerung dieser Vorrichtungen (Software, Computerprogramm, Algorithmus).

Bevorzugt wird überdies ein Verfahren zur photometrischen Untersuchung von Proben, aufweisend die Verwendung einer erfindungsgemäßen Vorrichtung für die photometrische Untersuchung von Proben. Ein solches Verfahren, in dem die Vorrichtung Teil eines Analysegerätes ist, könnte beispielsweise folgendermaßen ablaufen: Zunächst wird die Probenhalterungseinrichtung mit Probengefäßen, z.B. Küvetten, bestückt, die dann an einer Pipettierstation mit flüssigen Proben, z.B. Blut, Plasma und/oder Serum, befüllt werden. Im nächsten Schritt wird an einer Pipettierstation ein Analysereagenz hinzugefügt. Da in diesem Beispiel eine Durchmischung der Proben vor dem Messen notwendig ist, wird die Probe gemäß der Einstellungen des Analysegerätes durch eine Mischeinrichtung, hier einem rotierenden Magneten, gemischt, bevor sie von einer Messeinrichtung, hier einem Photometer, vermessen wird. In diesem Beispiel sind die Küvetten kreisbogenförmig angeordnet und fünf Photometer umfahren die Küvetten umlaufend mit einer Geschwindigkeit von 2Hz. Während der Messung wird die Probe mit Licht aus einer LED des Photometers bestrahlt. Der Photodetektor des Photometers ist hier eine Photodiode. In ihr entsteht ein elektrisches Signal, das proportional zur Intensität des durch die Küvette gelangenden Lichts ist. Nachdem eine Probe vermessen wurde, wird die Küvette, in der sich die Probe befindet, zu einem anderen Gerät weitertransportiert, beispielsweise zu einer Kühleinrichtung oder zu einem PCR-Gerät, oder die Küvette wird in ein Abfallgefäß entsorgt. Die Position der entfernten Küvette wird durch eine Küvette, in der sich eine neue Probe befindet, ersetzt.

Alternativ zum gerade beispielhaft beschriebene Verfahrensablauf können die Proben sich bereits in den Probengefäßen befinden, wenn die Probenhalterungseinrichtung mit diesen bestückt wird und/oder es wird sofort, ohne vorheriges Mischen, mit dem Messvorgang begonnen.

Ein weiterer Gegenstand der vorliegenden Erfindung ist damit ein Verfahren zur photometrischen Untersuchung von Proben. mittels einer Vorrichtung nach einem der Ansprüche 1 bis 6, wobei die mindestens zwei probenhaltigen Probengefäße kreisbogenartig an der Probenhalterungseinrichtung angeordnet sind und wobei die Probenhalterungseinrichtung unbewegt gehalten wird und die mehreren Messeinrichtungen, die unterschiedliche Wellenlängen aufweisen, mittels einer bewegbaren Einrichtung durch eine Rotationsbewegung der bewegbaren Einrichtung entlang der Anordnung der probenhaltigen Probengefäße verfahren werden, wobei optische Eigenschaften der Proben mit verschiedenen Wellenlängen gemessen werden.

Die Rotationsfrequenz der bewegbaren Einrichtung liegt bevorzugterweise im Bereich zwischen etwa 0.02 und etwa 25 Hz, besonders bevorzugt zwischen etwa 0.2 und etwa 10 Hz.

In einer weiteren bevorzugten Ausführungsform des erfindungsgemäßen Verfahrens wird mindestens eine optische Eigenschaft der Proben kontinuierlich gemessen. Dies kann durch analoges Auslesen der Messeinrichtung oder aber auch durch quasi-kontinuierliches digitales Auslesen mit einer hohen Ausleserate, beispielsweise > 1000 Hz, erfolgen.

In einer weiteren bevorzugten Ausführungsform des erfindungsgemäßen Verfahrens wird mindestens eine optische Eigenschaft der Proben mittels Licht einer Wellenlänge zwischen etwa 300 nm und etwa 1100 nm gemessen. Bevorzugterweise liegt die Wellenlänge bei 340 nm, 405 nm, 470 nm, 600 nm, 800 nm oder 850 nm.

In einer weiteren bevorzugten Ausführungsform des erfindungsgemäßen Verfahrens wird eine oder werden mehrere Proben bzw. Proben-Reagenz-Gemische in den Probengefäßen vor und/oder während der photometrischen Untersuchung durchmischt. Die Durchmischung kann dadurch erfolgen, dass ein magnetischer oder ferromagnetischer Stift im Probengefäß mittels eines rotierenden und/oder oszillierenden elektromagnetischen Feldes angetrieben wird. Bevorzugterweise liegt die Mischgeschwindigkeit in einem Bereich zwischen etwa 0.01 und etwa 1500 UpM (Umdrehungen pro Minute).

Das erfindungsgemäße Verfahren eignet sich insbesondere zur photometrischen Untersuchung von Körperflüssigkeitsproben, bevorzugt von Blut-, Plasma- und/oder Serumproben und kann vorzugsweise zur Bestimmung von Gerinnungs- und/oder Fibrinolyseparametern, d.h. zur Hämostase- und/oder Hämolysemessungen verwendet werden.

### ZEICHNUNGEN

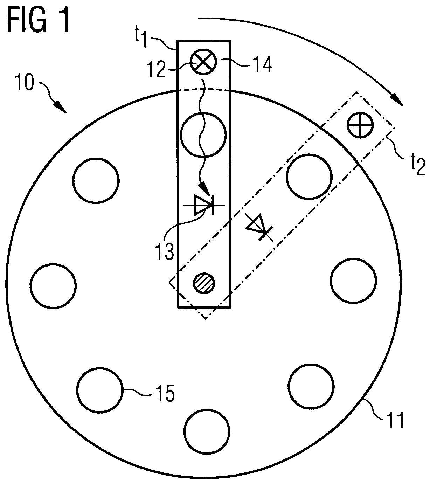

Fig. 1 zeigt eine schematische Darstellung einer Vorrichtung für die photometrische Untersuchung von Proben. In diesem Beispiel ist die Vorrichtung 10 Teil eines Analysegerätes. Sie weist eine Probenhalterungseinrichtung in Form einer zylindrischen Küvettenaufnahme 11 mit acht Mitteln 15 zum Halten von Probengefäßen, eine Messeinrichtung (hier ein Photometer), die eine LED 12 und eine Photodiode 13 aufweist, und eine bewegbare Einrichtung 14 auf. Die zylindrische Küvettenaufnahme 11 ist stationär ausgebildet und die LED 12 und die Photodiode 13 sind an der bewegbaren Einrichtung 14 so angeordnet, dass die LED 12 die in den Haltemitteln 15 positionierten Küvetten außen und die Photodiode 13 die Küvetten innen umfährt. Zur photometrischen Untersuchung von Proben in den Küvetten misst die Messeinheit aus LED 12 und Photodiode 13 kontinuierlich die Intensität des die Probe durchtretenden Lichtstrahls, und mithin - bei Bekanntheit einer entsprechenden Referenzgröße - die Absorption. Dabei bewegt sich die bewegbare Einheit beispielsweise kontinuierlich mit 2 Hz im Uhrzeigersinn. So wird zum Zeitpunkt t₁ eine Probe gemessen, und zum Zeitpunkt t₂ die nächste Probe.

Alternativ kann sich die bewegbare Einrichtung auch gegen den Uhrzeigersinn bewegen oder die Bewegungsrichtung ändern. Ebenso alternativ kann die Messeinrichtung auch Reflektions-, Beugungs-, Fluoreszenz-, Phosphoreszenz- und/oder Streuungsmessungen durchführen. Der Fachmann weiß, wie er für diese anderen Messprinzipien die Messeinrichtung im Einzelfall aufzubauen hat.

Fig. 2 zeigt eine schematische Darstellung des kontinuierlichen Messvorgangs gemäß Fig. 1. Die grauen Balken stellen jeweils den Zeitraum dar, innerhalb welchem der Messstrahl der Messeinrichtung eine Küvette passiert. Zum Zeitpunkt t₁, an dem gerade der Inhalt einer Küvette, also eine Probe vermessen wird, ist das gemessene Signal konstant. Wenn sich der Messstrahl hingegen gerade zwischen zwei Küvetten befindet, ist das entstehende Signal deutlich heterogener, da sich das Licht der LED an Glaskanten der Küvetten oder Luftzwischenräumen bricht. Sobald wieder eine Küvettenposition erreicht ist, hier t₂ (vgl. Fig. 1), wird das Signal wieder homogener.

Auf diese Weise kann die Auswertesoftware die gemessenen Werte den Küvetten (Proben) zuordnen und zwischen Messwerten, die zu Proben gehören, und solchen, die zwischen Proben genommen wurde, unterscheiden.

Alternativ kennt eine Auswerteelektronik stets die räumliche Anordnung von Messeinrichtung und Probengefäßen, zueinander, z.B. über bekannte Winkel und Winkelgeschwindigkeiten, und kann daher jederzeit das generierte Signal einem bestimmten Ort zuweisen. So können beispielsweise durch Glaskanten oder Luftzwischenräume generierte Signale von tatsächlichen, durch eine Probe generierten Messsignalen unterschieden werden.

Es kann dabei überdies vorgesehen sein, dass mindestens ein Teil der gewonnenen Messwerte über ein bestimmtes Zeitfenster gemittelt wird, um die Messgenauigkeit zu erhöhen.

Bei einer Probenhalterungseinrichtung mit 25 Küvetten und einer Rotationsfrequenz von 2 Hz passiert der Messstrahl jede Küvette beispielsweise 2 mal in der Sekunde.

Wird das Messsignal mit einer Samplingrate von 1 kHz aufgenommen, werden dabei also pro Umlauf 500 Messwerte genommen, von denen ein Teil - beispielsweise 50 % - zwischen den Küvetten oder an deren Glaskanten generiert wurde. Folglich werden pro Umlauf 250 auswertbare, d.h. "echte" Messwerte genommen, was bei 25 Küvetten in der Probenhalterungseinrichtung 10 "echten" Messwerten pro Küvette entspricht. Dabei kann z.B. vorgesehen sein, dass jeweils die ersten drei "echten" Messwerte verworfen werden, die nächsten vier gemittelt und die letzten drei erneut verworfen werden. Dabei wird das Messsignal mit einer so hohen Samplingrate aufgenommen, dass das Photometer bei der Bewegung an der Position der ortsfesten Küvette eine ausreichende Zahl von Messwerten aufnehmen kann, die für die Bestimmung der Messgröße notwendig sind. Soll das erfindungsgemäße Verfahren mit mehreren Messeinrichtungen mit verschiedenen Wellenlängen durchgeführt werden, wird das oben beschriebene Verfahren simultan auf zwei Samplingkanälen durchgeführt.

Die derzeitige Technik erlaubt überdies erheblich höhere Samplingraten, was letzten Endes durch breiteres Mitteln eine höhere Messgenauigkeit erlaubt.

Fig. 3 zeigt einen Querschnitt einer Vorrichtung für die photometrische Untersuchung von Proben. In diesem Beispiel weist die Vorrichtung 30, eine Probenhalterungseinrichtung in Form einer zylindrischen Küvettenaufnahme 31 für Küvetten 35, eine Messeinrichtung in Form eines Photometers, das eine LED 32 und eine Photodiode 33 aufweist, und eine bewegbare Einrichtung 34 auf. Die zylindrische Küvettenaufnahme 31 ist stationär ausgebildet und die LED 32 und die Photodiode 33 sind an der bewegbaren Einrichtung 34 angeordnet, wobei während der Messung die LED 32 die Küvetten 35 außen und die Photodiode 33 die Küvetten 35 innen umfährt. Die bewegbare Einrichtung 34 ist unterhalb der zylindrischen Küvettenaufnahme 31 angeordnet. Dadurch ist es jederzeit möglich, auf die Küvetten 35 z.B. mittels eines Greiferarms zuzugreifen.

Fig. 4 zeigt eine Ausführungsform der erfindungsgemäßen Vorrichtung für die photometrische Untersuchung von Proben. Die Ausführungsform entspricht der Vorrichtung aus Fig. 1 mit dem Unterschied, dass hier drei Messeinrichtungen anstatt nur einer vorliegen. Im Detail weist die Vorrichtung 40 eine Probenhalterungseinrichtung in Form einer zylindrischen Küvettenaufnahme 41 mit acht Mitteln 45 zum Halten von Probengefäßen in Form von Küvetten, drei Messeinrichtungen in Form von Photometern, die jeweils eine LED 42 und eine Photodiode 43 aufweisen, und eine bewegbare Einrichtung 44 auf. Zweckmäßiger Weise haben die LEDs unterschiedliche Wellenlängen, damit die Proben bei mehreren Wellenlängen gemessen werden können. Die zylindrische Küvettenaufnahme 41 ist stationär, das heißt nicht bewegbar, ausgebildet und die LEDs 42 und die Photodioden 43 sind an der bewegbaren Einrichtung 44 so angeordnet, dass die LEDs 42 die in den Haltemitteln 45 positionierten Küvetten außen und die Photodioden 43 die Küvetten innen umfahren. Alternativ kann die bewegliche Einrichtung mehr als drei Messeinrichtungen - beispielsweise fünf - aufweisen. Die Photodioden können alternativ durch ein CCD-Element ersetzt sein.

Fig. 5 zeigt eine weitere Vorrichtung mit konzentrischer Anordnung der Probengefäße in zwei Reihen. Dabei weist die Vorrichtung 50 eine Probenhalterungseinrichtung in Form einer zylindrischen Küvettenaufnahme 51 mit sechzehn Mitteln 55 zum Halten von Probengefäße in Form von Küvetten, eine Messeinrichtung, die eine LED 52 und eine Photodiode 53 aufweist, und eine bewegbare Einrichtung 54 auf. Die zylindrische Küvettenaufnahme 51 ist stationär ausgebildet. Durch die Anordnung der Küvetten in zwei konzentrischen Kreisreihen kann insgesamt die Küvettendichte und damit die Anzahl der zu untersuchenden Proben erhöht werden.

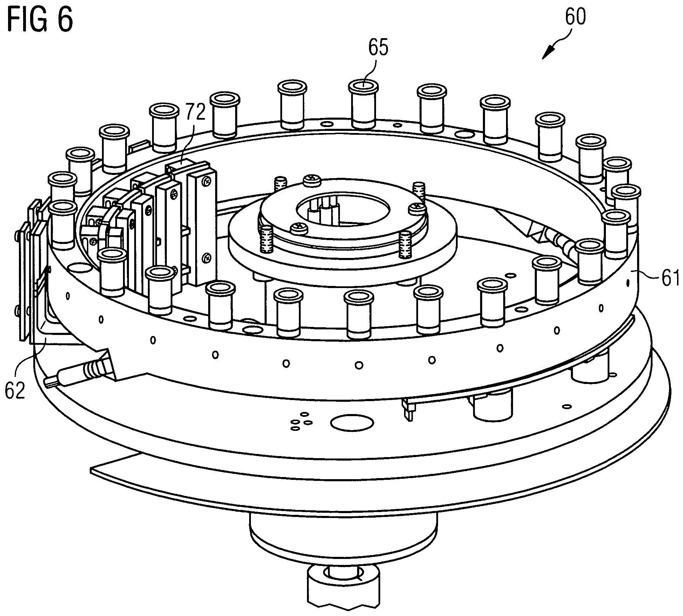

Fig. 6 zeigt eine dreidimensionale Darstellung einer erfindungsgemäßen Vorrichtung 60. Diese weist eine Probenhalterungseinrichtung in Form einer zylindrischen Küvettenaufnahme 61 für fünfundzwanzig Probengefäße in Form von Küvetten 65, und fünf Messeinrichtungen, jeweils bestehend aus einer äußeren Halterung 62 zur Aufnahme eines Photodetektors in Form einer Photodiode und einer inneren Halterung 72 zur Aufnahme einer Lichtquelle in Form einer LED, die auf einer gemeinsamen bewegbaren Einrichtung angeordnet sind. Die zylindrische Küvettenaufnahme 61 ist stationär, das heißt nicht bewegbar, ausgebildet. Die bewegbare Einrichtung ist unterhalb der zylindrischen Küvettenaufnahme 61 angeordnet. So lässt sich der vorteilhafte, jederzeit mögliche Zugriff auf alle Küvetten am einfachsten mit dem kontinuierlichen Messen vereinbaren. Hinzu kommt, dass so während des Messvorganges mehr oder weniger kontinuierlich Reagenzien in die Probengefäße pipettiert werden können.

In Abweichungen der Figuren kann außerdem vorgesehen sein, dass die LEDs die Küvetten innen und die Photodioden die Küvetten außen umfahren.

### BEZUGSZEICHENLISTE

- 10: Vorrichtung für die photometrische Untersuchung von Proben
- 11: Probenhalterungsvorrichtung in Form einer zylindrischen Küvettenaufnahme
- 12: Lichtquelle in Form einer LED
- 13: Photodetektor in Form einer Photodiode
- 14: bewegbare Einrichtung
- 15: Mittel zum Halten von Probengefäßen

- 30: Vorrichtung für die photometrische Untersuchung von Proben
- 31: Probenhalterungsvorrichtung in Form einer zylindrischen Küvettenaufnahme
- 32: Lichtquelle in Form einer LED
- 33: Photodetektor in Form einer Photodiode
- 34: bewegbare Einrichtung
- 35: Probengefäß in Form einer Küvette

- 40: Vorrichtung für die photometrische Untersuchung von Proben
- 41: Probenhalterungsvorrichtung in Form einer zylindrischen Küvettenaufnahme
- 42: Lichtquelle in Form einer LED
- 43: Photodetektor in Form einer Photodiode
- 44: bewegbare Einrichtung
- 45: Mittel zum Halten von Probengefäßen

- 50: Vorrichtung für die photometrische Untersuchung von Proben
- 51: Probenhalterungsvorrichtung in Form einer zylindrischen Küvettenaufnahme
- 52: Lichtquelle in Form einer LED
- 53: Photodetektor in Form einer Photodiode
- 54: bewegbare Einrichtung
- 55: Mittel zum Halten von Probengefäßen
- 60: Vorrichtung für die photometrische Untersuchung von Proben
- 61: Probenhalterungsvorrichtung in Form einer zylindrischen Küvettenaufnahme
- 62: äußere Halterung zur Aufnahme eines Photodetektors
- 65: Probengefäß in Form einer Küvette
- 72: innere Halterung zur Aufnahme einer Lichtquelle

### BEISPIELE

Die erfindungsgemäße Vorrichtung wurde in der folgenden Art realisiert, um die Ausführbarkeit und die Funktionsfähigkeit zu demonstrieren.

In diesem Beispiel wird eine (I, I₀) Absorptions- bzw. Extinktions/Trübungs-Messung durchgeführt, um die Hämostase in einer Blutprobe zu überwachen. Die Probenhalterungseinrichtung ist für 25 Küvetten ausgelegt, die kreisbogenförmig an der Probenhalterungseinrichtung angeordnet sind. An 4 Positionen der Probenhalterungseinrichtung ist jeweils eine Mischeinrichtung in Form eines Magnetrührers angeordnet. Zudem enthält die Vorrichtung fünf Photometer, jeweils eines für die Messung bei den Wellenlängen 340 nm, 405 nm, 470 nm, 600 nm und 850 nm.

| **Wellenlänge** | **Meßgröße** |
|---|---|
| 340 nm | NADH |
| 405 nm | (p) Nitroanilin zum Nachweis von Thrombin |
| 470 nm | Hämoglobin |
| 600 nm | Koagulationstest |
| 850 nm | Trübungsmessung |

Die Photometer sind auf einer bewegbaren Einrichtung angeordnet, die die Probengefäße mit einer Geschwindigkeit von 2 Hz umfährt. Der Antrieb erfolgt bevorzugt über einen Schrittmotor.

Eines der 25 Probengefäße dient als Kontrollgefäß zur Bestimmung von I₀ und ist daher lediglich mit Referenzlösung gefüllt. Die Ausleserate der Messeinrichtungen beträgt 150 kHz, d.h. es werden bei einer vorgegebenen Umlaufbahn pro Küvette und Umlauf 3000 Messwerte genommen. Aus diesen wird ein mittleres Fenster definiert, über welches wiederum ein Mittelwert berechnet wird, der die Absorption der Probe für die gegebene Wellenlänge reflektiert.

## Patentansprüche

1. Vorrichtung (40, 60) für die photometrische Untersuchung von Proben, wobei der Begriff "photometrische Untersuchung" Absorptions-, Reflektions-, Beugungs-, Fluoreszenz-, Phosphoreszenz-, Chemilumineszenz- und/oder Streuungsmessungen mit elektromagnetischen Wellen umfasst, die Vorrichtung aufweisend mindestens eine Probenhalterungseinrichtung (31, 61), welche Mittel (45) zum Halten von mindestens zwei Probengefäßen aufweist und wobei die Mittel (45) zum Halten der Probengefäße in kreisbogenartiger Anordnung an der Probenhalterungseinrichtung (41, 61) angeordnet sind, und eine bewegbare Einrichtung (44), wobei an der bewegbaren Einrichtung (44) mehrere Messeinrichtungen angeordnet und mittels der bewegbaren Einrichtung umlaufend zu der besagten kreisbogenartigen Anordnung verfahrbar sind, wobei jede Messeinrichtung mindestens eine Lichtquelle (42) und mindestens einen Photodetektor (43) aufweist, und wobei die Messeinrichtungen unterschiedliche Wellenlängen aufweisen,
**dadurch gekennzeichnet, dass**
die mindestens eine Probenhalterungseinrichtung (31, 61) stationär, das heißt nicht bewegbar, ausgebildet ist.

2. Vorrichtung (40, 60) gemäß Anspruch 1, **dadurch gekennzeichnet, dass** die Lichtquelle (42) eine Light Emitting Diode oder eine Laser Diode aufweist.

3. Vorrichtung (40, 60) gemäß einem der vorherigen Ansprüche, **dadurch gekennzeichnet, dass** die Messeinrichtungen so ausgestaltet: sind, dass sie während der photometrischen Untersuchung von Proben mithilfe der bewegbaren Einrichtung (44) kontinuierlich messen kann.

4. Vorrichtung (40, 60) gemäß einem der vorherigen Ansprüche, **dadurch gekennzeichnet, dass** die bewegbare Einrichtung (44) unterhalb der Probenhalterungseinrichtung (41) angeordnet ist.

5. Vorrichtung (40, 60) gemäß einem der vorherigen Ansprüche, **dadurch gekennzeichnet, dass** die Vorrichtung (40, 60) ferner mindestens eine an der Probenhalterungseinrichtung (41, 61) angeordnete Mischeinrichtung, bevorzugterweise eine magnetische Mischeinrichtung aufweist.

6. Vorrichtung (40, 60) gemäß Anspruch 5, **dadurch gekennzeichnet, dass** die Vorrichtung (40, 60) mehrere Mischeinrichtungen aufweist.

7. Verfahren zur photometrischen Untersuchung von Proben mittels einer Vorrichtung (40, 60) nach einem der Ansprüche 1 bis 6, wobei die mindestens zwei probenhaltigen Probengefäße kreisbogenartig an der Probenhalterungseinrichtung (41, 61) angeordnet sind und wobei die Probenhalterungseinrichtung (41, 61) unbewegt gehalten wird und die mehreren Messeinrichtungen, die unterschiedliche Wellenlängen aufweisen, mittels der bewegbaren Einrichtung (44) durch eine Rotationsbewegung der bewegbaren Einrichtung (44) entlang der Anordnung der probenhaltigen Probengefäße verfahren werden, wobei optische Eigenschaften der Proben mit verschiedenen Wellenlängen gemessen werden.

8. Verfahren gemäß Anspruch 7, wobei die Rotationsfrequenz der bewegbaren Einrichtung (44) im Bereich zwischen etwa 0.02 und etwa 25 Hz, bevorzugt zwischen etwa 0.2 und etwa 10 Hz liegt.

9. Verfahren gemäß einem der Ansprüche 7 bis 8, wobei mindestens eine optische Eigenschaft der Proben kontinuierlich gemessen wird.

10. Verfahren gemäß einem der Ansprüche 7 bis 9, wobei mindestens eine optische Eigenschaft der Proben mittels Licht einer Wellenlänge zwischen etwa 300 nm und etwa 1100 nm gemessen wird.

11. Verfahren gemäß einem der Ansprüche 7 bis 10, wobei eine oder mehrere Proben in den Probengefäßen vor und/oder während der photometrischen Untersuchung durchmischt werden, bevorzugterweise dadurch, dass ein magnetischer oder ferromagnetischer Stift im Probengefäß mittels eines rotierenden und/oder oszillierenden elektromagnetischen Feldes angetrieben wird.

12. Verfahren gemäß Anspruch 11, wobei die Mischgeschwindigkeit in einem Bereich zwischen etwa 0.01 und etwa 1500 UpM liegt.

13. Verfahren gemäß einem der Ansprüche 7 bis 12 zur photometrischen Untersuchung von Körperflüssigkeitsproben, bevorzugt von Blut-, Plasma- und/oder Serumproben.

14. Analysengerät zur automatisierten Untersuchung von Flüssigproben umfassend mindestens eine Vorrichtung zur Aliquotierung von Probenflüssigkeiten in ein Probengefäß, mindestens eine Vorrichtung zur Aliquotierung von Reagenzflüssigkeiten in ein Probengefäß sowie Mittel zur Steuerung dieser Vorrichtungen, wobei s es ferner eine Vorrichtung (40, 60) für die photometrische Untersuchung von Proben gemäß einem der Ansprüche 1 bis 6 aufweist.

## Claims

1. Device (40, 60) for the photometric examination of samples, wherein the term "photometric examination" comprises absorption, reflection, diffraction, fluorescence, phosphorescence, chemiluminescence and/or scattering measurements using electromagnetic waves,
the device comprising at least
a sample-holder apparatus (31, 61) having means (45) for holding at least two sample vessels and wherein the means (45) for holding the sample vessels are arranged on the sample-holder apparatus (41, 61) in an arc-like arrangement, and
a moveable apparatus (44), wherein
a plurality of measuring apparatuses are arranged on the moveable apparatus (44) and can be displaced rotating around the mentioned arc-like arrangement by means of the moveable apparatus,
wherein each measuring apparatus has at least one light source (42) and at least one photodetector (43), and
wherein the measuring apparatuses have different wavelengths,
**characterized in that**
the at least one sample-holder apparatus (31, 61) is designed to be stationary, that is to say not movable.

2. Device (40, 60) according to Claim 1, **characterized in that** the light source (42) has a light-emitting diode or a laser diode.

3. Device (40, 60) according to one of the preceding claims, **characterized in that** the measuring apparatuses are designed such that they can measure continuously during the photometric examination of samples with the aid of the moveable apparatus (44).

4. Device (40, 60) according to one of the preceding claims, **characterized in that** the moveable apparatus (44) is arranged below the sample-holder apparatus (41).

5. Device (40, 60) according to one of the preceding claims, **characterized in that** the device (40, 60) furthermore has at least one mixing apparatus, preferably a magnetic mixing apparatus, arranged on the sample-holder apparatus (41, 61).

6. Device (40, 60) according to Claim 5, **characterized in that** the device (40, 60) has a plurality of mixing apparatuses.

7. Process for the photometric examination of samples by means of a device (40, 60) according to one of Claims 1 to 6, wherein the at least two sample vessels containing samples are arranged in an arc-like manner on the sample-holder apparatus (41, 61) and wherein the sample-holder apparatus (41, 61) is kept stationary and the plurality of measuring apparatuses, which have different wavelengths, are displaced along the arrangement of the sample vessels containing samples by means of the moveable apparatus (44) by means of a rotational movement of the moveable apparatus (44), wherein optical properties of the samples are measured at different wavelengths.

8. Process according to Claim 7, wherein the rotational frequency of the moveable apparatus (44) lies in the range between approximately 0.02 and approximately 25 Hz, preferably between approximately 0.2 and approximately 10 Hz.

9. Process according to one of Claims 7 to 8, wherein at least one optical property of the samples is measured continuously.

10. Process according to one of Claims 7 to 9, wherein at least one optical property of the samples is measured by light with a wavelength between approximately 300 nm and approximately 1100 nm.

11. Process according to one of Claims 7 to 10, wherein one or more samples are mixed in the sample vessels before and/or during the photometric examination, preferably by virtue of the fact that a magnetic or ferromagnetic pin is driven in the sample vessel by means of a rotating and/or oscillating electromagnetic field.

12. Process according to Claim 11, wherein the mixing speed lies in a region between approximately 0.01 and approximately 1500 rpm.

13. Process according to one of Claims 7 to 12 for the photometric examination of bodily-fluid samples, preferably of blood, plasma and/or serum samples.

14. Analysis instrument for the automated examination of liquid samples comprising at least a device for aliquoting sample liquids in a sample vessel, at least one device for aliquoting reagent liquids in a sample vessel and means for controlling these devices, wherein the instrument furthermore has a device (40, 60) for the photometric examination of samples according to one of Claims 1 to 6.

## Revendications

1. Installation (40, 60) d'examen photométrique d'échantillons, l'expression « examen photométrique » comprenant des mesures d'absorption, de réflexion, de diffraction, de fluorescence, de phosphorescence, de chimioluminescence et/ou de dispersion par des ondes électromagnétiques, l'installation comprenant au moins un dispositif (31, 61) de porte-échantillons, qui a des moyens (45) pour porter au moins deux récipients à échantillon et dans lequel les moyens (45) pour porter les récipients à échantillon sont disposés suivant un agencement de type en arc de cercle sur le dispositif (41, 61) de porte-échantillons, et un dispositif (44) mobile, dans lequel plusieurs dispositifs de mesure sont disposés sur le dispositif (44) mobile et peuvent, au moyen du dispositif mobile, être déplacés en circulant par rapport audit agencement de type en arc de cercle, chaque dispositif de mesure ayant au moins une source (42) lumineuse et au moins un photodétecteur (43) et les dispositifs de mesure ayant des longueurs d'onde différentes,
**caractérisé en ce que**
le au moins un dispositif (31, 61) de porte-échantillons est stationnaire, c'est-à-dire qu'il ne peut pas être déplacé.

2. Installation (40, 60) suivant la revendication 1, **caractérisée en ce que** la source (42) lumineuse a une diode électroluminescente ou une diode laser.

3. Installation (40, 60) suivant l'une des revendications précédentes, **caractérisée en ce que** les dispositifs de mesure sont conformés de manière à pouvoir mesurer, en continu, pendant l'examen photométrique d'échantillons à l'aide du dispositif (44) mobile.

4. Installation (40, 60) suivant l'une des revendications précédentes, **caractérisée en ce que** le dispositif (44) mobile est disposé en dessous du dispositif (41) de porte-échantillons.

5. Installation (40, 60) suivant l'une des revendications précédentes, **caractérisée en ce que** l'installation (40, 60) a, en outre, au moins un dispositif de mélange monté sur le dispositif (41, 61) de porte-échantillons, de préférence, un dispositif de mélange magnétique.

6. Installation (40, 60) suivant la revendication 5, **caractérisée en ce que** l'installation (40, 60) a plusieurs dispositifs de mélange.

7. Procédé d'examen photométrique d'échantillons au moyen d'une installation (40, 60) suivant l'une des revendications 1 à 6, dans laquelle au moins deux récipients à échantillons contenant des échantillons sont disposés sur le dispositif (41, 61) de porte-échantillons de type en arc de cercle et dans lequel on maintient immobile le dispositif (41, 61) de porte-échantillons et on déplace les plusieurs dispositifs de mesure, qui ont des longueurs d'onde différentes, au moyen du dispositif (44) mobile suivant un mouvement de rotation du dispositif (44) mobile le long de l'agencement des récipients à échantillon contenant des échantillons, dans lequel on mesure des propriétés optiques des échantillons à des longueurs d'onde différentes.

8. Procédé suivant la revendication 7, dans lequel la fréquence de rotation du dispositif (44) mobile est dans la plage comprise entre 0,02 et environ 25 Hz, de préférence entre environ 0,2 et environ 10 Hz.

9. Procédé suivant l'une des revendications 7 à 8, dans lequel on mesure au moins une propriété optique des échantillons en continu.

10. Procédé suivant l'une des revendications 7 à 9, dans lequel on mesure au moins une propriété optique des échantillons au moyen d'une lumière d'une longueur d'onde comprise entre environ 300 nm et environ 1100 nm.

11. Procédé suivant l'une des revendications 7 à 10, dans lequel on mélange un ou plusieurs échantillons dans les récipients à échantillon, avant et/ou pendant l'examen photométrique, de préférence en entraînant un barreau magnétique ou ferromagnétique dans le récipient à échantillon, au moyen d'un champ électromagnétique tournant et/ou oscillant.

12. Procédé suivant la revendication 11, dans lequel la vitesse de mélange est dans une plage comprise entre 0,01 et environ 1500 tours par minute.

13. Procédé suivant l'une des revendications 7 à 12, l'examen photométrique d'échantillons de liquide corporel, de préférence d'échantillons sanguins, de plasma et/ou de sérum.

14. Appareil d'analyse pour l'examen automatisé d'échantillons liquides, comprenant au moins une installation pour prendre des aliquotes de liquides d'échantillon dans un récipient à échantillon, au moins une installation pour prendre des aliquotes de liquides réactifs dans un récipient à échantillon, ainsi que des moyens de commande de ces dispositifs, dans lequel il a, en outre, une installation (40, 60) pour l'examen photométrique d'échantillons suivant l'une des revendications 1 à 6.
